# EUROPEAN PATENT APPLICATION

(11) **EP 4 495 479 A1**
(43) Date of publication of application: **22.01.2025**
(21) Application number: 22932339.9
(22) Date of filing: 19.12.2022
(51) Int. Cl.: F22B 3/02, F22B 35/00, F22B 1/28

(54) **STEAM GENERATION DEVICE AND STEAM GENERATION METHOD**

(30) Priority: 15.03.2022 JP 2022040177
(71) Applicant: Hitachi, Ltd., Tokyo 100-8280 (JP)
(72) Inventor: MAITA, Hiroshi, Tokyo 100-8280 (JP); KAWAMURA, Hironobu, Tokyo 100-8280 (JP); SEKIYA, Sachio, Tokyo 100-8280 (JP)
(74) Representative: Mewburn Ellis LLP
(86) International application number: PCT/JP2022/046614
(87) International publication number: WO 2023/176077

(57) **Abstract**

This steam generation device comprises a heat exchanger, a compressor, and a control unit, wherein: the heat exchanger has a heat source medium flow path, water supply piping that supplies water, and an electric heater; the heat source medium flow path has a configuration for heating the water; the compressor has a configuration for compressing low-pressure steam generated from the water in the heat exchanger to produce high-pressure steam; the control unit adjusts the output of the compressor and the electric heater; and the control unit determines whether heating by the electric heater is necessary. The foregoing makes it possible to stably supply high-pressure steam even if there is a fluctuation in the heat exchange amount from a heat source, in a steam generation device which generates high-pressure steam without using a refrigerant and in which the heat source is warm drainage or the like that has a low temperature with susceptibility to fluctuations in temperature and flow rate.

## Description

### Technical Field

The present disclosure relates to a steam generation device and a steam generation method.

### Background Art

Reduction of fossil fuel consumption is a social object, and measures are also required for production lines using steam boilers. Therefore, as a heat source of a steam boiler, a heat source having a configuration replacing a combustor by using heavy oil or the like has been developed.

PTL 1 discloses a heat pump steam generation device that collects exhaust heat from factory waste water or the like to generate steam, the heat pump device including a heat pump unit that collects heat from hot water in an exhaust heat collection device (evaporator) to heat a refrigerant, compresses the refrigerant by a compressor, and heats heating target water in a condenser of the refrigerant to generate steam.

PTL 2 discloses a process steam control device capable of converting a pressure value of process steam not only from a low pressure to a high pressure but also from a high pressure to a low pressure, in which intermediate-pressure steam is decompressed and low-pressure steam is pressurized by using a screw-type rotor.

### Citation List

### Patent Literature

PTL 1: JP 2016-161248 A
PTL 2: JP 2008-19812 A

### Summary of Invention

### Technical Problem

The heat pump steam generation device disclosed in PTL 1 generates steam through a heat pump by using the refrigerant. Therefore, two heat exchangers involved in heat transfer are required. In addition, the refrigerant used for the heat pump is required, and the refrigerant is not specified, but a fluorocarbon refrigerant is usually used as the refrigerant.

In the process steam control device disclosed in PTL 2, the low-pressure steam that is normally supplied is turned into high-pressure steam.

An object of the present disclosure is to stably supply high-pressure steam even though an amount of heat exchange from a heat source fluctuates in a steam generation device that generates high-pressure steam without using a refrigerant by using hot wastewater or the like having a low temperature and having a temperature and a flow rate which are likely to fluctuate as the heat source.

### Solution to Problem

According to the present disclosure, a steam generation device includes: a heat exchanger; a compressor; and a control unit, in which the heat exchanger is configured to include a heat source medium flow path, a water supply pipe for supplying water, and an electric heater, the heat source medium flow path heating the water, the compressor is configured to compress low-pressure steam generated from the water by the heat exchanger into high-pressure steam, the control unit adjusts outputs of the compressor and the electric heater, and the control unit determines whether or not heating by the electric heater is required.

### Advantageous Effects of Invention

According to the present disclosure, it is possible to stably supply high-pressure steam even though an amount of heat exchange from a heat source fluctuates in a steam generation device that generates high-pressure steam without using a refrigerant by using hot wastewater or the like having a low temperature and having a temperature and a flow rate which are likely to fluctuate as the heat source.

### Brief Description of Drawings

[FIG. 1] FIG. 1 is a schematic configuration diagram illustrating a steam generation device according to an embodiment.
[FIG. 2] FIG. 2 is a flowchart illustrating a control method of the steam generation device in FIG. 1.

### Description of Embodiments

Hereinafter, an embodiment of the present disclosure will be described in detail with reference to the accompanying drawings.

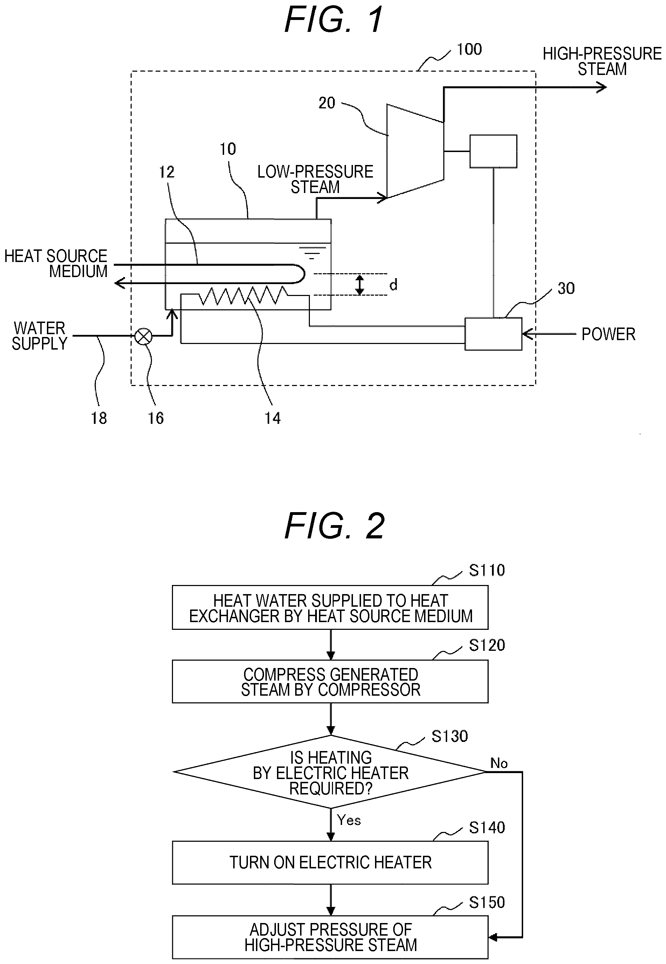

FIG. 1 is a schematic configuration diagram illustrating a steam generation device according to an embodiment.

In the drawing, a steam generation device 100 includes a heat exchanger 10, a compressor 20, and a control unit 30.

The heat exchanger 10 incorporates a heat source medium flow path 12 and an electric heater 14. In addition, a water supply pipe 18 including a pressure reducing valve 16 is connected to the heat exchanger 10. The heat source medium flow path 12 and the electric heater 14 are disposed to be come into contact with water (liquid) supplied to the heat exchanger 10. The water supplied to the heat exchanger 10 through the water supply pipe 18 is heated by at least one of the heat source medium flow path 12 and the electric heater 14. In this case, the water may be dispersed and supplied in a shower shape from the upper portion of the heat exchanger 10. A heat source to be supplied to the heat source medium flow path 12 is hot wastewater at lower than 100°C for which application is hardly obtained in a factory or the like.

Note that, regarding the water supplied to the heat exchanger 10, in order to suppress the generation of scale on a heat exchange surface, it is desirable to install a water quality management device such as an ion exchange water production device on the upstream side of the water supply pipe 18 to remove impurities.

The compressor 20 is configured to suck low-pressure steam generated in the heat exchanger 10 and discharge high-pressure steam. In addition, the compressor 20 is configured to receive a control signal from the control unit 30 and increase or decrease a rotation speed. The control unit 30 is also configured to adjust the output (calorific value) of the electric heater 14. Note that the control unit 30 may be implemented by hardware such as an IC or a CPU incorporated in the steam generation device 100, or may be implemented by a program or the like stored in a computer installed outside or at a remote place.

The inside of the heat exchanger 10 is decompressed by suction of the compressor 20. Therefore, water inside the heat exchanger 10 boils at lower than 100°C. The pressure reducing valve 16 of the water supply pipe 18 is provided to maintain a pressure reducing state inside the heat exchanger 10. Therefore, the low-pressure steam has a pressure equivalent to the saturated steam pressure corresponding to the water temperature, for example, when boiling occurs at about 60°C. In addition, the high-pressure steam can be set to a desired pressure by the compressor 20, but is usually set to a pressure equivalent to the saturated steam pressure corresponding to a water temperature of about 100°C to about 200°C.

The electric heater 14 is disposed below the heat source medium flow path 12. The difference in height between the horizontal center line of the heat source medium flow path 12 and the horizontal center line of the electric heater 14 is represented by d in the drawing. Here, the horizontal center line refers to a center line equidistant from the upper part and the lower part of an object in the horizontal direction.

By disposing the electric heater 14 below the heat source medium flow path 12 with reference to the horizontal center line, there is a high possibility that the electric heater 14 is covered with water even though the water supply amount decreases. Thus, it is possible to prevent empty heating. In addition, when the electric heater 14 is energized (turned on), it is desirable that the staying amount of water supplied to the inside of the heat exchanger 10 is at least enough to cover the entire electric heater 14.

FIG. 2 is a flowchart illustrating a control method of the steam generation device in FIG. 1.

In FIG. 2, water supplied to the heat exchanger 10 is heated by heat exchange with the heat source medium flow path 12 through which a heat source medium flows (step S110) . Then, steam (low-pressure steam) generated by heating is compressed by the compressor 20 (step S120). It is determined whether heating by the electric heater 14 is required (step S130). When it is determined that the heating is required, the electric heater is turned on (step S140). Then, the pressure of the high-pressure steam is adjusted (step S150).

On the other hand, when it is determined in step S130 that heating by the electric heater 14 is not required, the process proceeds to step S150 without turning on the electric heater.

With the above configuration, even when heat from the heat source medium is insufficient, it is possible to stably supply the high-pressure steam.

The present disclosure is not limited to the above-described embodiment, and includes various modifications. Furthermore, the present disclosure is not necessarily limited to one including all the above-described configurations.

Hereinafter, desirable embodiments according to the present disclosure will be collectively described.

In the steam generation device, the control unit adjusts at least one of the outputs of the compressor and the electric heater based on at least one of a heat source history that is a history of a change in an amount of heat supplied to the heat source medium flow path, a low-pressure steam pressure history which is a history of a pressure of the low-pressure steam, and a high-pressure steam pressure history which is a history of a pressure of the high-pressure steam.

As described above, it is possible to stably supply the high-pressure steam by using previous history information such as an external environment and the pressure of the steam as feedforward information of the control.

The control unit adjusts the output of the electric heater based on the history of the output of the electric heater.

By controlling the electric heater using such previous operation history information as the feedforward information of the control as described above, it is possible to stably supply the high-pressure steam.

The control unit adjusts at least one of the outputs of the compressor and the electric heater based on at least one of prediction information of the amount of heat to be supplied to the heat source medium flow path and prediction information of a demand for the high-pressure steam.

As described above, for example, by controlling the compressor and the electric heater using the prediction information of the demand and the supply regarding the future heat obtained from the external production management system as the feedforward information of the control, it is possible to stably supply the high-pressure steam.

The control unit adjusts the output of the compressor such that the pressure of the high-pressure steam is maintained at a value higher than a target pressure.

As a result, for example, when the shortage of the supply of the high-pressure steam is predicted from the history information and the future prediction information, it is possible to suppress the pressure decrease of the high-pressure steam to the minimum and it is possible to stably supply the high-pressure steam.

The electric heater is disposed below the heat source medium flow path with reference to the horizontal center line.

The control unit adjusts at least one of the outputs of the compressor and the electric heater based on at least one of the temperature and the flow rate of the heat source medium in the heat source medium flow path, the temperature and the volume of the water staying in the heat exchanger, the temperature of the water flowing through the water supply pipe, the temperature and the pressure of the low-pressure steam, and the temperature and the pressure of the high-pressure steam.

The heat source medium in the heat source medium flow path is hot wastewater.

There is provided a steam generation method of generating steam by using a steam generation device including a heat exchanger, a compressor, and a control unit, the heat exchanger including a heat source medium flow path, a water supply pipe for supplying water, and an electric heater, the steam generation method including: heating the water by the heat source medium flow path; compressing low-pressure steam generated from the water by the heat exchanger into high-pressure steam, by the compressor; adjusting outputs of the compressor and the electric heater by the control unit; and determining whether or not heating by the electric heater is required, by the control unit.

Hereinafter, effects of the technology of the present disclosure will be collectively described.

Since it is possible to maintain the amount of low-pressure steam generated even when the amount of heat of exhaust heat (hot wastewater and the like) fluctuates, it is possible to stably supply high-pressure steam.

Since the water supplied to the heat exchanger is directly heated, it is possible to reduce heat loss as compared with the case of heating the heat source medium.

Since the water supplied to the heat exchanger is directly heated, it is possible to perform stable control having high followability to load variation is high.

A heat pump using a refrigerant is not required, and only one heat exchanger is required as a component.

### Reference Signs List

10 heat exchanger
12 heat source medium flow path
14 electric heater
16 pressure reducing valve
18 water supply pipe
20 compressor
30 control unit
100 steam generation device

## Claims

1. A steam generation device comprising:
a heat exchanger;
a compressor; and
a control unit,
wherein the heat exchanger is configured to include a heat source medium flow path, a water supply pipe for supplying water, and an electric heater, the heat source medium flow path heating the water,
the compressor is configured to compress low-pressure steam generated from the water by the heat exchanger into high-pressure steam,
the control unit adjusts outputs of the compressor and the electric heater, and
the control unit determines whether or not heating by the electric heater is required.

2. The steam generation device according to claim 1, wherein the control unit adjusts at least one of the outputs of the compressor and the electric heater based on at least one of a heat source history that is a history of a change in an amount of heat supplied to the heat source medium flow path, a low-pressure steam pressure history which is a history of a pressure of the low-pressure steam, and a high-pressure steam pressure history which is a history of a pressure of the high-pressure steam.

3. The steam generation device according to claim 1, wherein the control unit adjusts the output of the electric heater based on a history of the output of the electric heater.

4. The steam generation device according to claim 1, wherein the control unit adjusts at least one of the outputs of the compressor and the electric heater based on at least one of prediction information of an amount of heat to be supplied to the heat source medium flow path, and prediction information of a demand for the high-pressure steam.

5. The steam generation device according to claim 1, wherein the control unit adjusts the output of the compressor such that the pressure of the high-pressure steam is maintained at a value higher than a target pressure.

6. The steam generation device according to claim 1, wherein the electric heater is disposed below the heat source medium flow path with reference to a horizontal center line.

7. The steam generation device according to claim 1, wherein the control unit adjusts at least one of the outputs of the compressor and the electric heater based on at least one of a temperature and a flow rate of a heat source medium in the heat source medium flow path, a temperature and a volume of the water staying in the heat exchanger, a temperature of the water flowing through the water supply pipe, a temperature and a pressure of the low-pressure steam, and a temperature and a pressure of the high-pressure steam.

8. The steam generation device according to claim 1, wherein a heat source medium in the heat source medium flow path is hot wastewater.

9. A steam generation method of generating steam by using a steam generation device including a heat exchanger, a compressor, and a control unit, the heat exchanger including a heat source medium flow path, a water supply pipe for supplying water, and an electric heater, the steam generation method comprising:
heating the water by the heat source medium flow path;
compressing low-pressure steam generated from the water by the heat exchanger into high-pressure steam, by the compressor;
adjusting outputs of the compressor and the electric heater by the control unit; and
determining whether or not heating by the electric heater is required, by the control unit.
